# EUROPÄISCHE PATENTSCHRIFT

(11) **EP 0 807 039 B1**
(45) Veröffentlichungstag und Bekanntmachung des Hinweises auf die Patenterteilung: **04.08.1999**
(21) Anmeldenummer: 96902939.6
(22) Anmeldetag: 30.01.1996
(51) Int. Cl.: B60T 8/48, B60T 8/24

(54) **VERFAHREN ZUM BETREIBEN EINER BLOCKIERGESCHÜTZTEN KRAFTFAHRZEUGBREMSANLAGE**
PROCESS FOR OPERATING AN ANTILOCKED MOTOR VEHICLE BRAKING SYSTEM
PROCEDE POUR FAIRE FONCTIONNER UN SYSTEME DE FREINAGE DE VEHICULES A MOTEUR A ANTIDERAPEUR AUTOMATIQUE

(30) Priorität: 01.02.1995 DE 19503076
(43) Veröffentlichungstag der Anmeldung: 19.11.1997
(73) Patentinhaber: Continental Teves AG & Co. oHG, 60488 Frankfurt (DE)
(72) Erfinder: GRÄBER, Johannes, D-65760 Eschborn (DE); ROMANO, Nino, D-60389 Frankfurt am Main (DE)
(86) Internationale Anmeldenummer: EP9600350
(87) Internationale Veröffentlichungsnummer: WO9623680

(56) Entgegenhaltungen:
- EP-A- 0 265 623
- WO-A-92/18361
- WO-A-93/24353
- DE-A- 4 029 793
- DE-A- 4 322 182
- DE-C- 4 003 579
- DE-C- 4 232 311
- DE-C- 4 329 140
- US-A- 4 812 777

## Beschreibung

Die Erfindung betrifft ein Verfahren zum Betreiben einer blockiergeschützten Kraftfahrzeugbremsanlage zur Fahrstabilitäts- oder Antriebsschlupfregelung, deren Betätigungseinheit einen mittels eines Bremspedals betätigbaren zweikreisigen Hauptbremszylinder aufweist, an dessen Druckräume den einzelnen Fahrzeugrädern zugeordnete Bremskreise angeschlossen sind, in denen Ventileinrichtungen eines eine Rückförderpumpe aufweisenden Hydroaggregats geschaltet sind, wobei in jedem der Bremskreise in einem Fahrstabilitäts- oder Antriebsschlupfregelfall mittels der Rückförderpumpe unabhängig vom Fahrerwillen ein hydraulischer Druck aufbaubar ist, und wobei ein Pedalstellungsgeber vorgesehen ist, der den Betätigungsweg des Bremspedals ermittelt und dessen Ausgangssignal einer elektronischen Steuereinheit zugeführt wird.

Aus der DE- 42 08 496 C1 ist eine Bremsanlage bekannt, deren Bremskraftverstärker zur Realisierung eines mit einer hohen Fahrzeugverzögerung verknüpften automatisch gesteuerten Bremsvorganges mit einem Magnetventil zusammenwirkt, das bei einer raschen Betätigung des Bremspedals eine erhöhte Bremsdruck-Entfaltung ermöglicht. Zur Realiserung dieses Bremsdruck-Steuerungskonzepts sind ein Bremspedal-Stellungsgeber, ein Bremslichtschalter sowie ein eine Fahrerverzögerungswunsch-Erkennung ermöglichender Kraftsensor vorgesehen. Außerdem sieht die bekannte Bremsanlage ein Antiblockierregelsystem (ABS) vor, das bei einer Bremsung für stabiles Verzögerungsverhalten des Fahrzeuges sorgt.

Der erwähnten Patentschrift sind jedoch keine konkreten Hinweise zu entnehmen, wie die darin beschriebene Bremsanlage zum Zwecke einer Fahrstabilitätsregelung (FSR) verwendet werden könnte.

Aus der DE- 42 32 311 C ist eine hydraulische Fahrzeugbremsanlage mit einer Blockierschutzeinrichtung bekannt, die zur Verbesserung des Fahrzeugspurverhaltens, insbesondere beim Fahren in Kurven durch automatisches Bremsen, eine Hilfsdruckquelle aufweist, die dem Vorfüllen der Fahrzeugradbremsen sowie dem Vorladen der Rückförderpumpe dient. Die Hilfsdruckquelle, die durch eine Parallelschaltung einer Hilfspumpe, einer Drossel sowie eines Hilfsdruckbegrenzungsventils gebildet ist, ist an einem Eingangsanschluß je eines hydraulischen Zylinders angeschlossen, der an die Verbindung zwischen Ausgang einer aus einem Bremskraftverstärker sowie einem ihm nachgeschalteten Hauptzylinder bestehenden Betätigungseinheit und dem ABS-Hydroaggregat bzw. der Radbremse geschaltet ist. Ein zweiter Eingang des Zylinders ist mit dem Hauptbremszylinder verbunden, wobei im Zylinder ein mit dem Hilfsdruck beaufschlagbarer Trennkolben geführt ist, der ein Ventil aufnimmt, das in Ruhestellung offen ist und eine Verbindung zwischen dem Hauptbremszylinder und der Radbremse ermöglicht. Wird die Hilfspumpe gestartet, so wird der Trennkolben verschoben, wodurch das Ventil die vorhin erwähnte Verbindung absperrt und das vom Trennkolben verdrängte Druckmittelvolumen ein Vorfüllen der Radbremsen und das Vorladen der Rückförderpumpe bewirkt. Ein den vom Fahrer gewünschten Druck repräsentierendes Signal wird von einem Drucksensor geliefert, der an den ersten Druckraum des Hauptzylinders angeschlossen ist.

Als nachteilig ist jedoch der verhältnismäßig hohe technische Aufwand anzusehen, der bei der Verwendung des Drucksensors zur Realisierung des bekannten Verfahrens erforderlich ist.

Es ist daher Aufgabe der vorliegenden Erfindung, ein Verfahren zum Betreiben einer blockiergeschützten Kraftfahrzeugbremsanlage der eingangs genannten Art vorzuschlagen, das unter Verwendung der in der Bremsanlage ohnehin vorhandenen Bauteile einfach und kostengünstig realisierbar ist. Insbesondere soll auf die Verwendung des aufwendigen Drucksensors verzichtet werden können.

Diese Aufgabe wird erfindungsgemäß dadurch gelöst, daß in einem Fahrstabilitäts- oder Antriebsschlupfregelfall, in dem in einem der Bremskreise ein hydraulischer Druck mittels der Rückförderpumpe aufgebaut wird, während der andere Bremskreis mit dem Hauptbremszylinder in Verbindung steht, dem Ausgangssignal des Pedalstellungsgebers ein Druckwert zugeordnet wird, der dem Druck entspricht, der in dem mit dem Hauptbremszylinder verbundenen, abhängig vom Fahrerwillen druckbeaufschlagten Bremskreis herrscht.

Eine Überwachung der Funktion des Pedalstellungsgebers wird bei einer vorteilhaften Weiterbildung des Erfindungsgegenstandes dadurch erreicht, daß der Druckwert mit einem zweiten Druckwert verglichen wird, der aus der am Fahrzeugrad auftretenden Verzögerung sowie dem Radschlupf ermittelt wird.

Die Erfindung wird im nachfolgenden Text an einem Ausführungsbeispiel im Zusammenhang mit der beiliegenden Zeichnung näher erläutert, deren einzige Figur eine Ausführung einer blockiergeschützten Kraftfahrzeugbremsanlage zeigt, mit der das erfindungsgemäße Verfahren realisiert werden kann.

Die in der Zeichnung dargestellte erfindungsgemäße Bremsanlage zur Durchführung des erfindungsgemäßen Verfahrens weist zwei Bremskreise I und II auf, deren Aufbau völlig identisch ist, so daß die folgende Beschreibung eines Bremskreises ebenso auf den anderen zutrifft. Die gezeigte Bremsanlage besteht im wesentlichen aus einer Betätigungseinheit 1, einer elektronischen Steuereinheit 8, Radbremsen 12,13,14,15, einem zwischen Radbremsen 12 bis 15 und Betätigungseinheit 1 angeordneten FSR/ASR-Hydroaggregat bzw. Druckmodulator 9 sowie einem mit der elektronischen Steuereinheit 8 zusammenwirkenden FSR/ASR-Regler 7, der Steuersignale für den Druckmodulator 9 erzeugt. Die Zuordnung der Radbremszylinder 12 bis 15 den einzelnen Bremskreisen I, II ist beispielsweise derart getroffen, daß das erste Radbremszylinderpaar 12,13 einer Fahrzeugachse und das andere Radbremszylinderpaar 14,15 der anderen Fahrzeugachse zugeordnet ist (Schwarzweiß-Aufteilung der Bremskreise). Denkbar ist allerdings auch eine diagonale Aufteilung der Bremskreise.

Jedem der nicht gezeigten Fahrzeugräder ist je ein Radsensor 16,17,18,19 zugeordnet, dessen der Radgeschwindigkeit entsprechendes Steuersignal dem FSR/ASR-Regler 7 zugeführt wird. Die Betätigungseinheit 1 besteht ihrerseits aus einem mittels eines Bremspedals 4 betätigbaren pneumatischen Bremskraftverstärker, vorzugsweise einem Unterdruckbremskraftverstärker 2, dem ein Hauptbremszylinder 3, vorzugsweise ein Tandemhauptzylinder, nachgeschaltet ist, dessen nicht gezeigte Druckräume über hydraulische Leitungen 37,41 mit dem Druckmodulator 9 in Verbindung stehen. An das Bremspedal 4 ist eine Betätigungsstange 27 angekoppelt, die eine Betätigung eines lediglich schematisch angedeuteten Steuerventils 5 ermöglicht, das den Aufbau eines pneumatischen Differenzdruckes im Gehäuse des Unterdruckbremskraftverstärkers 2 steuert. Ein durch Steuersignale der elektronischen Steuereinheit 8 ansteuerbarer, nicht gezeigter Elektromagnet ermöglicht dabei eine Fremdbetätigung des Steuerventils 5 unabhängig von einer am Bremspedal 4 eingeleiteten Betätigung.

Ein mit dem Bremspedal 4 in Wirkverbindung stehender Bremslichtschalter 6 ermöglicht die Erkennung einer auf dem Bremspedal 4 eingeleiteten Betätigung, während der Betätigungsweg des Bremspedals 4 mittels einer Sensoreinrichtung sensiert wird, die vorzugsweise durch einen analog arbeitenden, dem Unterdruckbremskraftverstärker 2 zugeordneten Wegsensor 11 gebildet ist. Der Wegsensor 11, dessen Ausgangssignale der elektronischen Steuereinheit 8 zugeführt werden und von ihr während des ersten Zeitabschnitts der Bremsbetätigung als Entscheidungsgrundlage für den aktiven Bremseneingriff ausgewertet werden, kann dabei vorzugsweise als lineares Potentiometer ausgebildet sein.

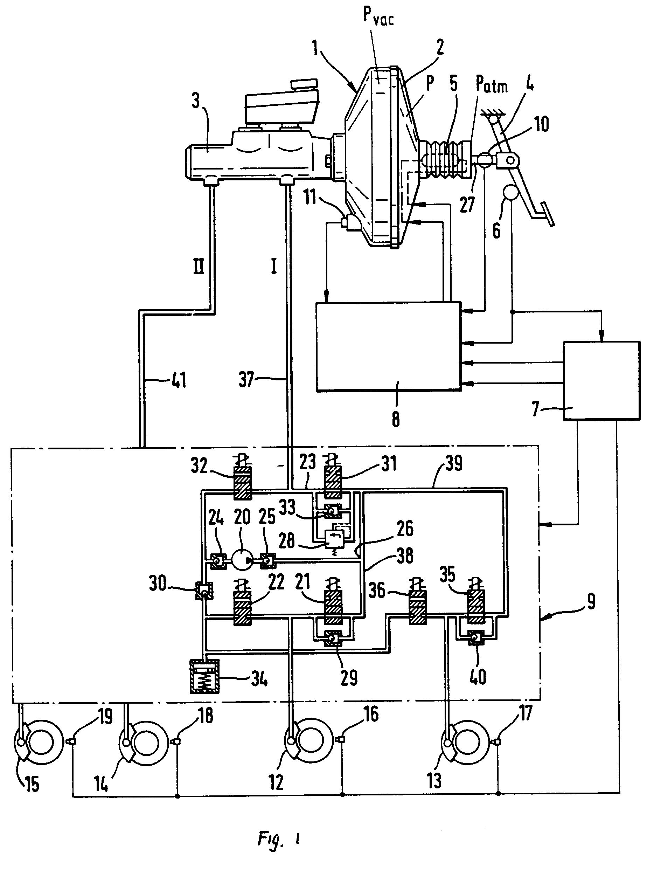

Um zu gewährleisten, daß der vorhin erwähnte Elektromagnet nach Beendigung des fremdkraftunterstützten Bremsvorgangs auch sicher abgeschaltet wird, ist schließlich eine elektrische Schalteinrichtung 10 vorgesehen, die in Fig. 1 lediglich schematisch angedeutet ist.

Das vorhin erwähnte FSR/ASR-Hydraulikaggregat 9 weist eine Motor-Pumpen-Gruppe auf, die aus einer durch einen nicht gezeigten Elektromotor angetriebenen hydraulischen Rückförderpumpe 20 besteht, deren Saugseite über ein erstes Rückschlagventil 24 sowie ein elektromagnetisch betätigbares Schaltventil 32 an den ersten Druckraum des Hauptbremszylinders 3 angeschlossen ist. Von der Druckseite der Rückförderpumpe 20 strömt das Druckmittel über ein zweites Rückschlagventil 25 und eine nicht gezeigte Dämpfungskammer zu einem hydraulischen Knotenpunkt 26. An diesen angeschlossen ist sowohl ein zum ersten Radbremszylinder 12 führender Leitungsabschnitt 38 als auch ein zum zweiten Radbremszylinder 13 führender Leitungsabschnitt 39. Eine hydraulische Leitung 23 verbindet die Druckseite der Rückförderpumpe 20 mit dem Tandemhauptzylinder 3. Außerdem ist zwischen dem Knotenpunkt 26 und dem Hauptbremszylinder 3 ein vorzugsweise elektromagnetisch betätigbares Trennventil 31 geschaltet, dem sowohl ein drittes Rückschlagventil 33 als auch ein Druckbegrenzungsventil 28 parallelgeschaltet ist. Zur Modulation des im ersten Radbremszylinder 12 eingesteuerten Drucks dienen eine Parallelschaltung eines Einlaß- (21) mit einem vierten Rückschlagventil 29 sowie ein Auslaßventil 22, wobei die erwähnte Parallelschaltung im Leitungsabschnitt 38 eingefügt ist und das Auslaßventil 22 zum Zwecke eines Radbremsdruckabbaus eine Verbindung zwischen dem ersten Radbremszylinder 12 und einem Niederdruckspeicher 34 ermöglicht, der über ein fünftes Rückschlagventil 30 mit der Saugseite der Rückförderpumpe 20 verbunden ist.

Um in dem zum betrachteten Bremskreis gehörenden zweiten Radbremszylinder 13 analog zum bereits betrachteten Radbremszylinder 12 den darin eingesteuerten hydraulischen Druck regulieren zu können, sind eine zweite Parallelschaltung eines zweiten Einlaß- (35) mit einem sechsten Rückschlagventil 40 sowie ein zweites Auslaßventil 36 vorgesehen, wobei die erwähnte Parallelschaltung im Leitungsabschnitt 39 eingefügt ist und das Auslaßventil 36 zum Zwecke eines Radbremsdruckabbaus eine Verbindung zwischen dem zweiten Radbremszylinder 13 und dem Niederdruckspeicher 34 herstellt.

Bei einer Normalbremsung kann in den Radbremszylindern 12,13 sowohl ein Druckauf- als auch ein Druckabbau durch entsprechende Betätigung der Betätigungseinheit 1 über das offene Trennventil 31 sowie die offenen Einlaßventile 21,35 erfolgen.

Bei einer ABS-Regelbremsung, bei der beispielsweise das der Radbremse 12 zugeordnete Rad zu blockieren droht, wird die Rückförderpumpe 20 gestartet. Sowohl das Schalt(32) als auch das Trennventil 31 bleiben unbetätigt. Die Druckmodulation erfolgt durch entsprechendes Schalten des Ein- und des Auslaßventils 21 und 22, wobei das in den Niederdruckspeicher 34 abgelassene Druckmittel mit der Rückförderpumpe 20 auf das Hauptbremszylinder-Druckniveau zurückgefördert wird.

Beim Eintritt in jeden Fremdbremsvorgang wird eine Information über den vom Fahrzeugfahrer gewünschten Druck benötigt. Zu diesem Zweck wird der vom Wegsensor 11 gelieferten Weginformation ein Druckwert zugeordnet , der dem in dem Bremskreis herrschenden Druck entspricht, der nicht "aktiv" gebremst wird, d.h. dessen Verbindung mit dem Hauptbremszylinder 3 während der Regelung bestehen bleibt. Um die Zuordnung der Fahrerwunsch-Druckwerte den Wegsensorsignalen zu ermöglichen, enthält die elektronische Steuereinheit 8 oder der FSR/ASR-Regler 7 den beiden Bremskreisen I und II entsprechende Tabellen, in denen die vorhin erwähnten Druckwerte abgelegt sind.

Eine sinnvolle Überwachung der einwandfreien Funktion des Wegsensors 11 kann durchgeführt werden, indem die aus den Wegsensorsignalen ermittelten Druckwerte mit zweiten Druckwerten verglichen werden, die aus der am Fahrzeugrad auftretenden Verzögerung sowie seinem Schlupf ermittelt werden. Relevante Informationen über die letztgenannten Größen werden von den einzelnen Radsensoren 16,17,18 und 19 an den FSR/ASR-Regler 7 geliefert.

Während der Anlaufphase der Rückförderpumpe 20 wird der Bremskraftverstärker 2 bei jedem Regelvorgang unabhängig vom Fahrerwillen angesteuert, so daß die Radbremsen 12, 13 bzw. 14,15 vorgefüllt werden. Für einen weiteren Druckaufbau, ggf. in den Radbremsen 12,13 wird das Trennventil 31 geschlossen und das Schaltventil 32 geöffnet. Dadurch erzeugt die Rückförderpumpe 20 am Knotenpunkt 26 einen durch das Druckbegrenzungsventil 28 begrenzten hohen Druck, der es ermöglicht, durch Schalten der Ein- und Auslaßventile 21,35 und 22, 36 den gewünschten Fremdbremsdruck in den Radbremszylindern 12,13 individuell einzustellen. Nach dem Umschalten der Ventile 32 und 31 kann die Ansteuerung des Bremskraftverstärkers 2 zurückgenommen werden und der nicht "aktiv" gebremste Kreis wieder mit dem Tandemhauptzylinder verbunden werden.

Wie bereits erwähten wurde, erfolgt ein Druckaufbau über die offenen Einlaßventile 21,35. Eine Druckhaltephase wird durch Umschalten der Einlaßventile 21,35 erreicht, während ein Druckabbau durch Umschalten der Auslaßventile 22,36 bei noch geschlossenen Einlaßventilen 21,35 erfolgt. Mit Hilfe von Druck-Aufbau-, Halte- und Abbauphasen wird der für die Regelung erforderliche Druckverlauf erzeugt. Das in den Niederdruckspeicher 34 abgelassene Druckmittel wird durch die Rückförderpumpe 20 zurückgefördert. Dies wird durch Umschalten des Schaltventils 32 in seinen geschlossenen Zustand ermöglicht, in dem die Saugseite der Rückförderpumpe 20 vom Hauptbremzylinder 3 getrennt wird, und zwar solange, bis der Niederdruckspeicher 34 entleert ist.

### Bezugszeichenliste

- 1: Betätigungseinheit
- 2: Unterdruckbremskraftverstärker
- 3: Hauptbremszylinder
- 4: Bremspedal
- 5: Steuerventil
- 6: Bremslichtschalter
- 7: FSR/ASR-Regler
- 8: Steuereinheit
- 9: Druckmodulator
- 10: Schalteinrichtung
- 11: Wegsensor
- 12: Radbremszylinder
- 13: Radbremszylinder
- 14: Radbremszylinder
- 15: Radbremszylinder
- 16: Radsensor
- 17: Radsensor
- 18: Radsensor
- 19: Radsensor
- 20: Rückförderpumpe
- 21: Einlaßventil
- 22: Auslaßventil
- 23: Leitung
- 24: Rückschlagventil
- 25: Rückschlagventil
- 26: Knotenpunkt
- 27: Betätigungsstange
- 28: Druckbegrenzungsventil
- 29: Rückschlagventil
- 30: Rückschlagventil
- 31: Rückschlagventil
- 32: Schaltventil
- 33: Trennventil
- 34: Niederdruckspeicher
- 35: Einlaßventil
- 36: Auslaßventil
- 37: Leitung
- 38: Leitungsabschnitt
- 39: Leitungsabschnitt
- 40: Rückschlagventil
- 41: Leitung

## Patentansprüche

1. Verfahren zum Betreiben einer blockiergeschützten Kraftfahrzeugbremsanlage zur Fahrstabilitäts-oder Antriebsschlupfregelung, deren Betätigungseinheit (1) einen mittels eines Bremspedals (4) betätigbaren zweikreisigen Hauptbremszylinder (3) aufweist, an dessen Druckräume den einzelnen Fahrzeugrädern zugeordnete Bremskreise (I, II) angeschlossen sind, in denen Ventileinrichtungen (21, 22, 31, 32, 35, 36) eines eine Rückförderpumpe (20) aufweisenden Hydroaggregats (9) geschaltet sind, wobei in jedem der Bremskreise (I, II) in einem Fahrstabilitäts- oder Antriebschlupfregelfall mittels der Rückförderpumpe (20) unabhängig vom Fahrerwillen ein hydraulischer Druck aufbaubar ist, und wobei ein Pedalstellungsgeber (11) vorgesehen ist, der den Betätigungsweg des Bremspedals (4) ermittelt und dessen Ausgangssignal einer elektronischen Steuereinheit (R) zugeführt wird, dadurch **gekennzeichnet**, daß in einem Fahrstabilitäts- oder Antriebsschlupfregelfall, in dem in einem (I bzw. II) der Bremskreise (I,II) ein hydraulischer Druck mittels der Rückförderpumpe (20) aufgebaut wird, während der andere Bremskreis (II bzw. I) mit dem Hauptbremszylinder (3) in Verbindung steht, dem Ausgangssignal des Pedalstellungsgebers (11) ein Druckwert zugeordnet wird, der dem Druck entspricht, der in dem mit dem Hauptbremszylinder (3) verbundenen, abhängig vom Fahrerwillen druckbeaufschlagten Bremskreis (I bzw. II) herrscht.

2. Verfahren nach Anspruch 1, dadurch **gekennzeichnet**, daß der Druckwert mit einem zweiten Druckwert verglichen wird, der aus der am Fahrzeugrad auftretenden Verzögerung sowie dem Radschlupf ermittelt wird.

## Claims

1. Method of operating an anti-lock automotive vehicle brake system for driving stability control or traction slip control having an actuating unit (1) which includes a dual-circuit master brake cylinder (3) operable by a brake pedal (4), brake circuits (I, II) associated with the individual vehicle wheels which are connected to pressure chambers of the master brake cylinder, valve assemblies (21, 22, 31, 32, 35, 36) of a hydraulic unit (9) with a return pump (20) which are interposed in the brake circuits, wherein, in a driving stability or traction slip control operation, hydraulic pressure can be built up in each of the brake circuits (I, II) by way of the return pump (20) irrespective of the driver's wish, and wherein a pedal position sensor (11) is provided which determines the actuating travel of the brake pedal (4) and the output signal of which is sent to an electronic control unit (8),
**characterized** in that, in a driving stability or traction slip control operation, when hydraulic pressure is built up by the return pump (20) in one (I or II) of the brake circuits (I, II) and the other brake circuit (II or I) is connected to the master brake cylinder (3), a pressure value is assigned to the output signal of the pedal position sensor (11), which pressure value corresponds to the pressure prevailing in the brake circuit (I or II) that is connected to the master brake cylinder (3) and pressurized in response to the driver's wish.

2. Method as claimed in claim 1,
**characterized** in that the pressure value is compared to a second pressure value which is determined from the deceleration occurring on the vehicle wheel and from the wheel slip.

## Revendications

1. Procédé pour faire fonctionner un système de freinage de véhicule automobile a antiblocage pour la régulation de la stabilité de marche ou de l'antipatinage, système dont l'unité d'actionnement (1) comporte un maître-cylindre de frein (3) à deux circuits, qui peut être actionné au moyen d'une pédale de frein (4) et aux chambres de pression duquel sont raccordés des circuits de freinage (I,II), associés aux roues individuelles du véhicule et dans lesquels sont montés des ensembles de soupapes (21, 22, 31, 32, 35, 36) d'un groupe hydraulique (9) comportant une pompe de refoulement (20), une pression hydraulique pouvant être, en cas de régulation de la stabilité de marche ou de l'antipatinage, établie dans chacun des circuits de freinage (I,II) indépendamment de la volonté du conducteur au moyen de la pompe de refoulement (20), et un transmetteur de position de pédale (11) étant prévu, qui détermine la course d'actionnement de la pédale de frein (4) et dont le signal de sortie est apporté à une unité de commande électronique (8), **caractérisé** en ce que, dans un cas de régulation de la stabilité de marche ou de l'antipatinage où une pression hydraulique est établie dans un (I ou II) des circuits de freinage (I, II) au moyen de la pompe de refoulement (20), tandis que l'autre circuit de freinage (II ou I) est relié au maître-cylindre de frein (3), on associe au signal de sortie du transmetteur de position de pédale (11) une valeur de pression qui correspond à la pression qui règne dans le circuit de freinage (I ou II) relié au maître-cylindre de frein (3), sollicité en pression en fonction de la volonté du conducteur.

2. Procédé selon la revendication 1**, caractérisé** en ce que la valeur de pression est comparée à une deuxième valeur de pression qui est déterminée à partir de la décélération apparaissant sur la roue du véhicule ainsi que du patinage de la roue.
